# EUROPÄISCHE PATENTSCHRIFT

(11) **EP 2 702 831 B1**
(45) Veröffentlichungstag und Bekanntmachung des Hinweises auf die Patenterteilung: **10.10.2018**
(21) Anmeldenummer: 12723097.7
(22) Anmeldetag: 16.04.2012
(51) Int. Cl.: H05B 33/08

(54) **ANSTEUERVORRICHTUNG FÜR EINE WENIGSTENS EINE LED UMFASSENDE BELEUCHTUNGSEINRICHTUNG EINES KRAFTFAHRZEUGS, KRAFTFAHRZEUG UND VERFAHREN ZUM BETRIEB EINER ANSTEUERVORRICHTUNG**
CONTROL DEVICE FOR A MOTOR VEHICLE ILLUMINATION DEVICE COMPRISING AT LEAST ONE LED, MOTOR VEHICLE, AND METHOD FOR OPERATING A CONTROL DEVICE
DISPOSITIF DE COMMANDE DESTINÉ À UN DISPOSITIF D'ÉCLAIRAGE DOTÉ D'AU MOINS UNE DIODE ÉLECTROLUMINESCENTE, POUR UN VÉHICULE À MOTEUR, VÉHICULE À MOTEUR ET PROCÉDÉ DE FONCTIONNEMENT D'UN DISPOSITIF DE COMMANDE

(30) Priorität: 26.04.2011 DE 102011018582
(43) Veröffentlichungstag der Anmeldung: 05.03.2014
(73) Patentinhaber: Audi AG, 85045 Ingolstadt (DE)
(72) Erfinder: BAIER, Thomas, 85051 Ingolstadt (DE); MAYER, Werner, 85084 Reichertshofen (DE)
(74) Vertreter: Thielmann, Frank
(86) Internationale Anmeldenummer: PCT/EP2012/001635
(87) Internationale Veröffentlichungsnummer: WO 2012/146349

(56) Entgegenhaltungen:
- EP-A1- 1 164 819
- DE-A1-102006 021 694
- DE-A1-102006 028 670
- US-A1- 2008 224 633
- US-A1- 2009 184 662
- US-A1- 2010 090 618
- US-A1- 2010 134 038

## Beschreibung

Die Erfindung betrifft ein Kraftfahrzeug, umfassend
- eine wenigstens eine LED umfassende Beleuchtungseinrichtung,
- eine Ansteuervorrichtung für die wenigstens eine LED umfassende Beleuchtungseinrichtung, insbesondere für ein Tagfahrlicht und/oder ein Positionslicht, wobei die Ansteuervorrichtung einen Umrichter sowie eine Steuereinheit zur Ansteuerung des Umrichters in Abhängigkeit eines der Steuereinheit zugeführten Steuersignals aufweist, wobei die Steuereinheit zur Einstellung der Helligkeit der Beleuchtungseinrichtung durch eine pulsweitenmodulierte Ansteuerung des Umrichters zur Ausgabe eines pulsweitenmodulierten Ausgangssignals für die Beleuchtungseinrichtung in Abhängigkeit eines Tastgrades des zugeführten Steuersignals eingerichtet ist, sowie
- ein Beleuchtungssteuergerät, das über eine Steuerleitung für das zugeführte Steuersignal mit der Ansteuervorrichtung verbunden ist.
Immer häufiger werden in heutigen Kraftfahrzeugen LEDs (light emitting diodes) als Leuchtmittel eingesetzt. Um die korrekten Spannungen für die LEDs zu erzeugen, ist es bekannt, eine Ansteuervorrichtung mit einem Umrichter zu verwenden, welcher eine Versorgungsspannung in die korrekte Betriebsspannung der LEDs umwandelt. Eine solche Ansteuervorrichtung kann auch als LED-Treibermodul bezeichnet werden.

Dabei wurde auch vorgeschlagen, ein Tagfahrlicht gemeinsam mit einem Positionslicht eines Kraftfahrzeugs in einer einzigen, LEDs als Leuchtmittel aufweisenden Beleuchtungsvorrichtung zu realisieren. Dann werden die LEDs der Beleuchtungsvorrichtung für das Tagfahrlicht beispielsweise mit ihrer maximalen Leuchthelligkeit betrieben. Für die Positionslicht-Funktion (häufig auch als Standlicht bezeichnet) wird eine sehr viel geringere Helligkeit gewünscht, beispielsweise im Bereich von 5 - 10 % der Helligkeit des Tagfahrlichts. Daher wurde vorgeschlagen, in der Ansteuervorrichtung auch eine Steuereinheit, beispielsweise einen Mikrocontroller, vorzusehen, über die der Umrichter pulsweitenmoduliert betrieben werden kann. Bei der bekannten Ansteuervorrichtung wird über eine geeignete Steuerleitung der Ansteuervorrichtung ein Steuersignal zur Verfügung gestellt, welches selbst pulsweitenmoduliert ist. Die Steuereinheit setzt den eingehenden Tastgrad in exakt den gleichen Tastgrad für den Umrichter um. Ist beispielsweise der Tastgrad des Steuersignals 6 %, so wird der Umrichter mit einem Tastgrad von 6 % betrieben, um ein Positionslicht zu erzeugen.

Dabei treten jedoch eine Vielzahl von Problemen auf. Zum einen muss, wie beschrieben, mit sehr niedrigem Tastgrad gearbeitet werden, das bedeutet, es ist eine sehr kurze Pulsdauer gegeben, so dass ein Beleuchtungssteuergerät des Kraftfahrzeugs nur sehr schlecht Kurzschlüsse oder dergleichen detektieren kann. Ein weiteres Problem ergibt sich dadurch, dass die Ansteuervorrichtung derzeit nur versorgt wird, wenn auch das entsprechende Licht mit der Beleuchtungsvorrichtung erzeugt werden soll. Das bedeutet aber, dass die Steuereinheit, insbesondere der Mikrocontroller, bei den entsprechenden Einschaltvorgängen erst hochfahren muss, wofür eine Zeit benötigt wird. Den Tastgrad einfach bei 0 zu belassen, ist nicht möglich, nachdem ein Tastgrad von 0 des Steuersignals als ein Fehler erkannt würde, nachdem die Pulsweitenmodulation gänzlich fehlen würde.

Daher kann ein Ausschalten der Beleuchtungsvorrichtung nur realisiert werden, indem auch die Ansteuervorrichtung ausgeschaltet wird. Diese Problematik ist insbesondere dann interessant, wenn weitere, kurzzeitig benötigte Lichtfunktionen in die Beleuchtungsvorrichtung integriert sein sollen, beispielsweise die Funktion eines Fahrtrichtungsanzeigers. So wurde auch vorgeschlagen, eine einzige Beleuchtungsvorrichtung für Tagfahrlicht, Positionslicht und den Fahrtrichtungsanzeiger zu verwenden. Dann wäre aber ein ständiges Hochfahren der Steuereinheit notwendig, was unerwünscht ist.

US 2009/184662 A1 betrifft ein Verfahren zur Erzeugung von Dimmsignalen. Dort wird vorgeschlagen, einen Dimm-Level-Detektionschaltkreis zu verwenden, der ein erstes Spannungssignal erzeugt, welches in ein pulsweitenmoduliertes Dimmsignal umgesetzt wird. Das Eingangssignal kann auch ein pulsweitenmoduliertes Signal sein, wobei der Tastgrad des Ausgangssignals gemäß einer vordefinierten Beziehung von dem Tastgrad von dem Eingangssignals abweichen kann, wobei wiederum lineare und nicht lineare Beziehungen denkbar sind. In einer speziellen Ausgestaltung kann dann, wenn ein maximales Dimm-Level unterschritten ist, statt einem Dimm-Ausgangssignal ein "shutdown signal", also ein Herunterfahrsignal ausgegeben werden. Zweck dieser Maßnahme ist es, zu vermeiden, dass die Eingangsleistung unter ein minimal mögliches Betriebsniveau fällt.

EP 1 164 819 A1 betrifft dimmbare elektronische Vorschaltgeräte für die Nutzung mit Leuchtstofflampen.

DE 10 2006 021 694 A1 betrifft eine Beleuchtungseinrichtung für ein Kraftfahrzeug beschrieben, bei der die einzelnen LED-Module bzw. LEDs der einzelnen Module vollkommen variabel über eine Steuereinrichtung ansteuerbar sein sollen, sodass sich je nach Bedarf unterschiedlichste Ausleuchtmuster über das Abblendlicht oder das Fernlicht erzeugen lassen.

Der Erfindung liegt daher die Aufgabe zugrunde, die Ansteuerung der LEDs dahingehend zu verbessern, dass ein vollständiges Ausschalten der Ansteuervorrichtung bei einfacher Realisierung nicht mehr notwendig ist.

Zur Lösung dieser Aufgabe sind bei einem Kraftfahrzeug der eingangs genannten Art die Merkmale des Anspruchs 1 vorgesehen, wonach in der Steuereinheit eine Kennlinie abgelegt ist, die den Tastgrad des zugeführten Steuersignals auf einen Tastgrad der pulsweitenmodulierten Ansteuerung des Umrichters abbildet, wobei wenigstens ein unterhalb eines Schwellwertes liegender Bereich des Tastgrads des zugeführten Steuersignals auf einen Tastgrad der pulsweitenmodulierten Ansteuerung des Umrichters von Null abgebildet wird.

Erfindungsgemäß wird also vorgeschlagen, nicht weiter eine 1:1-Abbildung des Tastgrads des Steuersignals auf den Tastgrad des Ausgangssignals der Ansteuervorrichtung vorzunehmen, sondern in der Steuereinheit, insbesondere dem Mikrocontroller, eine Kennlinie abzulegen, die in einem niedrigen Bereich des Tastgrads noch weiterhin auf einen Tastgrad von 0 abbildet. Die Steuereinheit, insbesondere der Mikrocontroller, ist nun dazu ausgebildet, den Tastgrad beim Betrieb des Umrichters anhand der Kennlinie zu wählen. Das heißt aber, dass bei Tastgraden unterhalb des Schwellenwertes der Tastgrad für den Umrichter 0 ist, mithin keine Lichtausgabe erfolgt. Damit ist aber durch die Schaffung des Bereiches eine Möglichkeit geschaffen worden, einen ausgeschalteten Zustand der Beleuchtungsvorrichtung trotz des Betriebs der Ansteuervorrichtung zu schaffen. Es kann mithin ein bevorzugt unterhalb des Schwellwerts liegender, möglicherweise jedoch auch durch den Schwellwert selbst gebildeter Tastgrad definiert werden, der einem Steuerbefehl "Beleuchtungsvorrichtung aus" entspricht. Es ist mithin möglich, die Ansteuervorrichtung (das LED-Treibermodul) dauerhaft zu versorgen, da der Zustand "Licht aus" nun mittels des Steuersignals angefordert werden kann. Mithin resultieren zudem schnellere Reaktionszeiten auf Zustandswechsel. Ein weiterer Vorteil der erfindungsgemäßen Ansteuervorrichtung liegt darin, dass selbst dann, wenn sehr niedrige Tastgrade am Umrichter erforderlich sind, beispielsweise für ein Positionslicht von 6 % oder dergleichen, dennoch ein höherer Tastgrad für das Steuersignal verwendet werden kann (und muss), so dass die Pulslänge größer gewählt werden kann und beispielsweise ein Beleuchtungssteuergerät besser Kurzschlüsse detektieren kann. Dabei wird allgemein nur mit gültigen Signalen gearbeitet, das bedeutet, es wird kein Fehler festgestellt, wie dies beispielsweise bei einem Tastgrad von 0 % der Fall wäre.

In weiterer Ausgestaltung der vorliegenden Erfindung kann vorgesehen sein, dass der Schwellwert bei 10 % bis 30 % liegt, insbesondere bei 20 %. Dann kann beispielsweise vorgesehen werden, dass ein Tastgrad von 10 % als "Licht aus" (logischer Zustand) definiert wird.

Weiterhin kann vorgesehen sein, dass der oberhalb des Schwellwerts liegende Tastgrad des zugeführten Steuersignals linear auf einen Tastgrad der pulswetenmodulierten Ansteuerung des Umrichters von 0 - 100 % abgebildet wird. Es kann also für den verbleibenden Bereich weiterhin eine lineare Abbildung verwendet werden, um auf möglichst einfache Weise alle Helligkeitsgrade der Beleuchtungsvorrichtung gleich genau zugänglich zu erhalten.

Ferner kann vorgesehen sein, dass die Steuereinheit zur Verwendung einer doppelten Frequenz für die Pulsweitenmodulation am Umrichter im Vergleich zur Frequenz der Pulsweitenmodulation des zugeführten Steuersignals ausgebildet ist. Es kann also die Frequenz für die LEDs höher gewählt werden, nachdem sich so ein verbessertes Gesamtbild ergibt. Ein Flimmern der LEDs oder der-gleichen wird so weitgehend vermieden. So kann beispielsweise die Pulsweitenmodulation des Steuersignals mit 100 Hz erfolgen, am Umrichter jedoch mit 200 Hz gearbeitet werden.

Während die meisten Ausführungsbeispiele der vorliegenden Erfindung mit Bezug auf ein kombiniertes Tagfahrlicht/Positionslicht als Beleuchtungsvorrichtung, in das gegebenenfalls auch ein Fahrtrichtungsanzeiger integriert sein kann, erläutert werden, sei dennoch nochmals deutlich hervorgehoben, dass die vorliegende Erfindung selbstverständlich auch für andere Beleuchtungsvorrichtungen, bei denen bezüglich der LEDs mit einer Pulsweitenmodulation gearbeitet wird, angewendet werden kann.

Insbesondere kann, wenn die Beleuchtungsvorrichtung im Bereich der Scheinwerfer eingesetzt wird, ein Kraftfahrzeug mit zwei Beleuchtungsvorrichtungen vorgesehen werden, denen jeweils eine Ansteuervorrichtung zugeordnet ist. Die Ansteuervorrichtung kann beispielsweise benachbart der Beleuchtungsvorrichtung selbst, beispielsweise an einem Gehäuse, angeordnet werden.

Es kann ferner vorgesehen sein, dass das Beleuchtungssteuergerät zum Ausschalten der Beleuchtungsvorrichtung durch Senden eines Steuersignals, dessen Tastgrad unterhalb des Schwellwerts liegt oder exakt dem Schwellwert entspricht, an die Steuereinheit der Ansteuervorrichtung ausgebildet ist. Wie bereits dargelegt, kann beispielsweise, falls der Schwellwert bei 20 % liegt, ein Tastgrad von 10 % als logisches "Licht aus" definiert werden. Soll das Licht ausgeschaltet werden, nutzt das Beleuchtungssteuergerät diesen Tastgrad, so dass die Ansteuervorrichtung selbst, insbesondere die Steuereinheit, weiter aktiv bleiben kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: die Struktur einer Ansteuervorrichtung des erfindungsgemäßen Kraftfahrzeugs, und
- Fig. 3: eine Kennlinie für die Tastgrade.

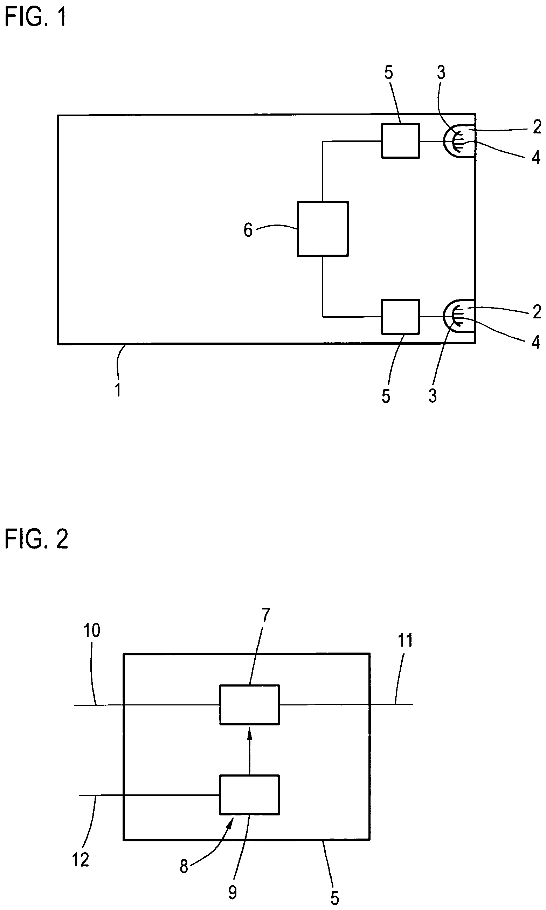

Fig. 1 zeigt eine Prinzipskizze eines erfindungsgemäßen Kraftfahrzeugs 1. Ersichtlich sind im Bereich der Scheinwerfer 2 jeweils eine Beleuchtungseinrichtung 3 mit mehreren LEDs 4 vorgesehen.

Die Beleuchtungseinrichtungen 4 dienen vorliegend als Tagfahrlicht und als Positionslicht, zusätzlich kann vorgesehen sein, dass ein Fahrtrichtungsanzeiger mit LEDs die selbe Optik verwendet.

Um die LEDs 4 der Beleuchtungseinrichtungen 3 mit der korrekten Betriebsspannung ansteuern zu können und zudem die Helligkeit der LEDs 4 variieren zu können, ist jeder Beleuchtungseinrichtung 3 eine Ansteuervorrichtung 5 zugeordnet, die wiederum durch ein Beleuchtungssteuergerät 6 zentral angesteuert werden.

Fig. 2 zeigt eine Prinzipskizze der Ansteuervorrichtung 5. Sie umfasst einen Umrichter 7, der über eine Steuereinheit 8, hier einen Mikrocontroller 9, geschaltet wird. Während über eine Versorgungsleitung 10 ein Versorgungssignal an den Umrichter 7 geführt wird, aus welchem dann das pulsweitenmodulierte Ausgangssignal für die LEDs 4 erzeugt wird, wofür eine entsprechende Ausgangsleitung 11 vorgesehen ist, ist ferner eine Steuerleitung 12 vorgesehen, die ein pulsweitenmoduliertes Steuersignal an den Mikrocontroller 9 liefert.

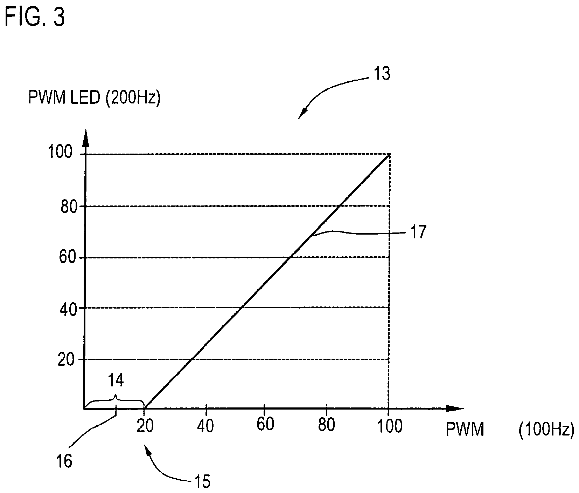

Der Tastgrad des Steuersignals wird durch den Mikrocontroller 9 nun ausgewertet und in einen Tastgrad für den Umrichter 7 übersetzt. Hierfür ist eine Kennlinie 13, wie sie in Fig. 3 dargestellt ist, in dem Mikrocontroller 9 abgelegt. Ersichtlich wird der Tastgrad nicht 1:1 übersetzt, sondern es existiert zunächst ein Bereich 14, der bis zu einem Schwellwert 15 für den Tastgrad des Steuersignals reicht, der hier 20 % beträgt. D. h. aber, wenn der Tastgrad des Steuersignals im Bereich 14 liegt, so ist der Ausgangstastgrad für den Umrichter 0, d. h., die Beleuchtungsvorrichtung wird nicht betrieben. Entsprechend ist auch ein Wert 16, hier 10 %, definiert, über den das Beleuchtungssteuergerät 6 der Ansteuervorrichtung 5 mitteilen kann, dass das Licht ausgeschaltet sein soll. Die Ansteuervorrichtung kann während dieser Zeit weiter aktiv sein, der Mikrocontroller 9 muss nicht heruntergefahren werden.

Oberhalb des Schwellwertes, Gerade 17, wird der verbleibende Bereich des Tastgrades des Steuersignals, also 20 - 100 %, auf die komplette Spannbreite des Tastgrades für den Umrichter, also 0 - 100 %, abgebildet, wobei ein linearer Zusammenhang vorliegt.

Soll also beispielsweise die Beleuchtungseinrichtung 3 als Tagfahrlicht betrieben werden, kann das Steuersignal einen Tastgrad von 100 % aufweisen, der in einen Tastgrad von 100 % am Umrichter 7 übersetzt wird. Ein Betrieb der Beleuchtungseinrichtung 3 mit Positionslicht kann beispielsweise erfolgen, indem ein Tastgrad des Steuersignals von etwa 30 % gewählt wird, was dann auf einen entsprechend niedrigen Tastgrad am Umrichter 7 abgebildet wird.

Es sei an dieser Stelle noch angemerkt, dass die Pulsweitenmodulation des Steuersignals, wie in Fig. 3 auch vermerkt, mit 100 Hz erfolgt, während die Pulsweitenmodulation des Ausgangssignals mit 200 Hz erfolgt.

## Patentansprüche

1. Kraftfahrzeug (1), umfassend
- wenigstens eine wenigstens eine LED (4) umfassende Beleuchtungseinrichtung (3),
- eine Ansteuervorrichtung (5) für die wenigstens eine LED (4) umfassende Beleuchtungseinrichtung (3), wobei die Ansteuervorrichtung (5) einen Umrichter (7) sowie eine Steuereinheit (8) zur Ansteuerung des Umrichters (7) in Abhängigkeit eines der Steuereinheit (8) zugeführten Steuersignals aufweist, wobei die Steuereinheit (8) zur Einstellung der Helligkeit der Beleuchtungseinrichtung (3) durch eine pulsweitenmodulierte Ansteuerung des Umrichters (7) zur Ausgabe eines pulsweitenmodulierten Ausgangssignals für die Beleuchtungseinrichtung (3) in Abhängigkeit eines Tastgrades des zugeführten Steuersignals eingerichtet ist, sowie
- ein Beleuchtungssteuergerät (6), das über eine Steuerleitung (12) für das zugeführte Steuersignal mit der Ansteuervorrichtung (5) verbunden ist,
**dadurch gekennzeichnet,**
**dass** in der Steuereinheit (8) eine Kennlinie (13) abgelegt ist, die den Tastgrad des zugeführten Steuersignals auf einen Tastgrad der pulsweitenmodulierten Ansteuerung des Umrichters (7) abbildet, wobei wenigstens ein unterhalb eines Schwellwertes (15) liegender Bereich (14) des Tastgrads des zugeführten Steuersignals auf einen Tastgrad der pulsweitenmodulierten Ansteuerung des Umrichters (7) von Null abgebildet wird.

2. Kraftfahrzeug nach Anspruch 1,
**dadurch gekennzeichnet,**
**dass** der Schwellwert (15) bei 10% bis 30% liegt, insbesondere bei 20%.

3. Kraftfahrzeug nach Anspruch 1 oder 2,
**dadurch gekennzeichnet,**
**dass** der oberhalb des Schwellwerts (15) liegende Tastgrad des zugeführten Steuersignals linear auf einen Tastgrad der pulsweitenmodulierten Ansteuerung des Umrichters (7) von Null bis 100 Prozent abgebildet wird.

4. Kraftfahrzeug nach einem der vorangehenden Ansprüche,
**dadurch gekennzeichnet,**
**dass** die Steuereinheit (8) zur Verwendung einer doppelten Frequenz für die Pulsweitenmodulation am Umrichter (7) im Vergleich zur Frequenz der Pulsweitenmodulation des zugeführten Steuersignals ausgebildet ist.

5. Kraftfahrzeug nach einem der vorangehenden Ansprüche,
**dadurch gekennzeichnet,**
**dass** die Steuereinheit (8) ein Mikrocontroller (9) ist.

6. Kraftfahrzeug nach einem der vorangehenden Ansprüche,
**dadurch gekennzeichnet,**
**dass** das Beleuchtungssteuergerät (6) zum Ausschalten der Beleuchtungsvorrichtung (3) durch Senden eines Steuersignals, dessen Tastgrad unterhalb des Schwellwerts (15) liegt oder exakt dem Schwellwert (15) entspricht, an die Steuereinheit (8) der Ansteuervorrichtung (5) ausgebildet ist.

## Claims

1. Motor vehicle (1), comprising
- at least one lighting device (3) comprising at least one LED (4),
- an actuation device (5) for the lighting device (3) comprising at least one LED (4), wherein the actuation device (5) has an inverter (7) and a control unit (8) to actuate the inverter (7) as a function of a control signal supplied to the control unit (8), wherein the control unit (8) is configured to set the brightness of the lighting device (3) by a pulse width modulated actuation of the inverter (7) to emit a pulse width modulated output signal for the lighting device (3) as a function of a duty cycle of the control signal supplied and
- a lighting control device (6) which is connected to the actuation device (5) via a control line (12) for the control signal supplied,
**characterised in that**
a characteristic curve (13) is stored in the control unit (8) which shows the duty cycle of the control signal supplied on a duty cycle of the pulse width modulated actuation of the inverter (7), wherein at least one range (14) of the duty cycle of the control signal supplied located below a threshold value (15) is shown on a duty cycle of the pulse width modulate actuation of the inverter (7) of zero.

2. Motor vehicle according to claim 1,
**characterised in that**
the threshold value (15) is 10% to 30%, in particular 20%.

3. Motor vehicle according to claim 1 or 2,
**characterised in that**
the duty cycle of the control signal supplied located above the threshold value (15) is shown linearly on a duty cycle of the pulse width modulated actuation of the inverter (7) of zero to 100 percent.

4. Motor vehicle according to any one of the preceding claims,
**characterised in that**
the control unit (8) is designed to use a dual frequency for the pulse width modulation on the inverter (7) in comparison to the frequency of the pulse width modulation of the control signal supplied.

5. Motor vehicle according to any one of the preceding claims,
**characterised in that**
the control unit (8) is a microcontroller (9).

6. Motor vehicle according to any one of the preceding claims,
**characterised in that**
the lighting control device (6) is designed to switch off the lighting device (3) by sending to the control unit (8) of the actuation device (5) a control signal, whose duty factory is below the threshold value (15) or corresponds exactly to the threshold value (15).

## Revendications

1. Véhicule automobile (1), comprenant
- au moins un dispositif d'éclairage (3) comprenant au moins une diode électroluminescente (4),
- un dispositif de commande (5) pour le dispositif d'éclairage (3) comprenant au moins une diode électroluminescente (4), dans lequel le dispositif de commande (5) présente un convertisseur (7) ainsi qu'une unité de commande (8) pour la commande du convertisseur (7) en fonction d'un signal de commande transmis à l'unité de commande (8), dans lequel l'unité de commande (8) est conçue pour le réglage de la luminosité du dispositif d'éclairage (3) par une commande modulée en largeur d'impulsion du convertisseur (7) pour la sortie d'un signal de sortie modulé en largeur d'impulsion pour le dispositif d'éclairage (3) en fonction d'un rapport cyclique du signal de commande transmis, ainsi que
- un appareil de commande d'éclairage (6) qui est raccordé, par le biais d'une ligne de commande (12) pour le signal de commande transmis, au dispositif de commande (5),
**caractérisé en ce**
**qu'**une ligne caractéristique (13) est déposée dans l'unité de commande (8), laquelle illustre le rapport cyclique du signal de commande transmis sur un rapport cyclique de la commande modulée en largeur d'impulsion du convertisseur (7), dans lequel au moins une zone (14) se trouvant sous une valeur seuil (15) du rapport cyclique du signal de commande transmis est illustrée sur un rapport cyclique de la commande modulée en largeur d'impulsion du convertisseur (7) de zéro.

2. Véhicule automobile selon la revendication 1,
**caractérisé en ce**
**que** la valeur seuil (15) est de 10 % à 30 %, en particulier de 20 %.

3. Véhicule automobile selon la revendication 1 ou 2,
**caractérisé en ce**
**que** le rapport cyclique se trouvant au-dessus de la valeur seuil (15) du signal de commande transmis est illustré linéairement sur un rapport cyclique de la commande modulée en largeur d'impulsion du convertisseur (7) de zéro à 100 pour cent.

4. Véhicule automobile selon l'une quelconque des revendications précédentes,
**caractérisé en ce**
**que** l'unité de commande (8) est réalisée pour l'utilisation d'une double fréquence pour la modulation en largeur d'impulsion sur le convertisseur (7) en comparaison de la fréquence de la modulation en largeur d'impulsion du signal de commande transmis.

5. Véhicule automobile selon l'une quelconque des revendications précédentes,
**caractérisé en ce**
**que** l'unité de commande (8) est un microcontrôleur (9).

6. Véhicule automobile selon l'une quelconque des revendications précédentes,
**caractérisé en ce**
**que** l'appareil de commande d'éclairage (6) est réalisé pour la mise hors service du dispositif d'éclairage (3) par l'émission d'un signal de commande, dont le rapport cyclique se trouve sous la valeur seuil (15) ou correspond exactement à la valeur seuil (15), à l'unité de commande (8) du dispositif de commande (5).
